Europäisches Patentamt

European Patent Office

Office européen des brevets

(11) Publication number: **0 196 605**
**A2**

(12) **EUROPEAN PATENT APPLICATION**

(21) Application number: **86104099.6**

(22) Date of filing: **25.03.86**

(51) Int. Cl.⁴: **G 11 B 5/265**

(30) Priority: **30.03.85 JP 67546/85**

(43) Date of publication of application:
**08.10.86 Bulletin 86/41**

(84) Designated Contracting States:
**DE FR GB NL**

(71) Applicant: **Kabushiki Kaisha Toshiba**
**72, Horikawa-cho Saiwai-ku**
**Kawasaki-shi Kanagawa-ken 210(JP)**

(71) Applicant: **Toshiba Computer Engineering Corporation**
**2-9, Suehiro-cho**
**Oome-shi Tokyo(JP)**

(72) Inventor: **Okamura, Hiroshi c/o Patent Division**
**Kabushiki Kaisha Toshiba 1-1 Shibaura 1-chome**
**Minato-ku Tokyo 105(JP)**

(72) Inventor: **Kusunoki, Masahiro c/o Patent Division**
**Kabushiki Kaisha Toshiba 1-1 Shibaura 1-chome**
**Minato-ku Tokyo 105(JP)**

(72) Inventor: **Saito, Toshiya c/o Patent Division**
**Kabushiki Kaisha Toshiba 1-1 Shibaura 1-chome**
**Minato-ku Tokyo 105(JP)**

(72) Inventor: **Ohashi, Hiroshi c/o Patent Division**
**Kabushiki Kaisha Toshiba 1-1 Shibaura 1-chome**
**Minato-ku Tokyo 105(JP)**

(74) Representative: **Henkel, Feiler, Hänzel & Partner**
**Möhlstrasse 37**
**D-8000 München 80(DE)**

(54) **Magnetic head assembly.**

(57) A magnetic head assembly (32) comprising first and second core assemblies (37, 39) of different types and properties. The first core assembly (37) is of a leading erase type for the perpendicular magnetic recording system, while the second one (39) is of a tunnel erase type for the longitudinal magnetic recording system. These core assemblies (37, 39) are arranged on either side of a slider groove (36). When used with the double-sided recording system, they are both located on one side of the slider groove.

FIG. 3A

FIG. 3B

EP 0 196 605 A2

- 1 -

## Magnetic head assembly

The present invention relates to a magnetic head assembly for floppy disks, hard disks or video disks, and more specifically to a magnetic head assembly with a plurality of cores of different types, characteristics, etc.

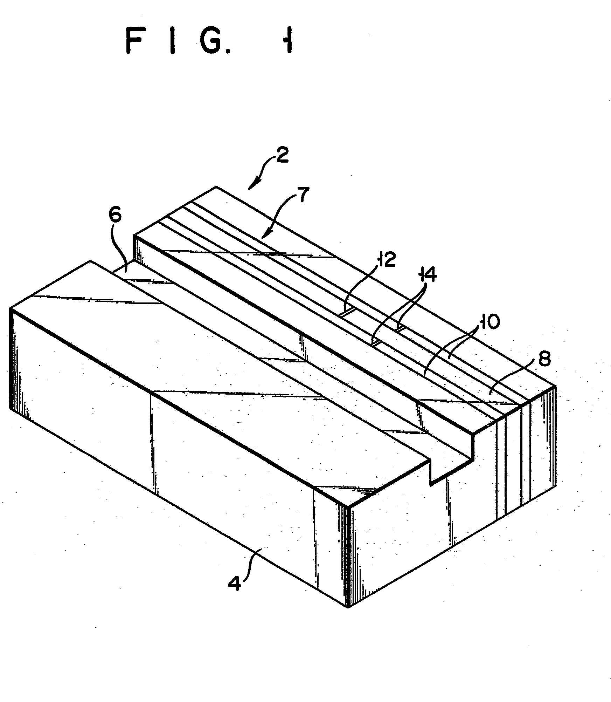

Conventional magnetic head assemblies, e.g., those for floppy disks, have the construction shown in Fig. 1. Magnetic head assembly 2 has ceramic slider 4. Slider groove 6 is cut in the center of that surface of slider 4 which contacts a floppy disk, extending along the transfer direction of the disk. One core assembly 7 is integrally coupled to slider 4. The core assembly includes read/write core 8 and two erase cores 10 on either side thereof. The cores are shaped like sheets and are stacked and bonded to one another. Core 8 is formed with read/write gap 12, and each core 10 with erase gap 14.

Systems for magnetically recording information on the floppy disk include the longitudinal and perpendicular magnetic recording systems. Recently, floppy disk units with improved magnetic recording density have been developed. Core assembly 7 of magnetic head assembly 2 must be of a type and properties best suited for the recording system and recording density used. If the longitudinal recording system is used, for example, the core assembly must be of a tunnel erase type, as

shown in Fig. 1. If the perpendicular recording system is used, the core assembly must be of a leading wide erase type. If the recording density of the magnetic recording system is higher, then the read/write gap of the core assembly used is narrowed in proportion.

Presently, there are various floppy disk units which are different in magnetic recording system and recording density. However, the disk of a specific type that can be used in on unit cannot be used in the other these units.

The object of the present invention is to provide a magnetic head assembly capable of writing in and/or reading information from a magnetic disk in a plurality of modes using different magnetic recording systems and different recording densities. The magnetic disk apparatuses with the magnetic head assemblies of the invention are compatible with one another.

The above object of the present invention is achieved by providing a magnetic head assembly with a plurality of coil-including core assemblies which are different in type, properties, etc. The core assemblies are alternatively used in accordance with the magnetic recording system and recording density required.

According to one aspect of the invention, first and second core assemblies of different types and properties are arranged on either side of a slider groove which is formed in the center of the magnetic head assembly. The distance between the first and second core assemblies is an integral multiple of the track pitch of the magnetic disk. Therefore, the two core assemblies can be located over different tracks of the disk. Thus, the first and second core assemblies can be replaced with each other, for alternative use, by only changing the track number of a program in a control device of a drive mechanism for the magnetic head assembly, without requiring any mechanical switching means.

According to another aspect of the invention, first

- 3 -

0196605

and second core assemblies are arranged on one side of a slider groove. Magnetic head assemblies with this arrangement are adapted for use with a double-sided recording system. If two such head assemblies are opposed to each other, each in contact with its corresponding side of the magnetic disk, their core assemblies cannot face one another. Thus, magnetic coupling can never take place between the core assemblies.

This invention can be more fuly understood from the following detailed description when taken in conjunction with the accompanying drawings, in which:

Fig. 1 is a perspective view of a prior art magnetic head assembly;

Fig. 2 is a perspective view of a carriage mounted with a magnetic head assembly according to the present invention;

Fig. 3A is a perspective view of a magnetic head assembly according to a first embodiment of the invention;

Fig. 3B is a cross-sectional view as taken along line 3A-3A in Fig. 3A;

Fig. 4 is a perspective view of a magnetic head assembly according to a second embodiment of the invention;

Fig. 5A is a perspective view of a magnetic head assembly according to a third embodiment of the invention;

Fig. 5B is a cross-sectional view as taken along line 5B-5B in Fig. 5A;

Fig. 6 is a perspective view of a magnetic head assembly according to a fourth embodiment of the invention; and

Fig. 7 is a perspective view of a magnetic head assembly according to a fifth embodiment of the invention;

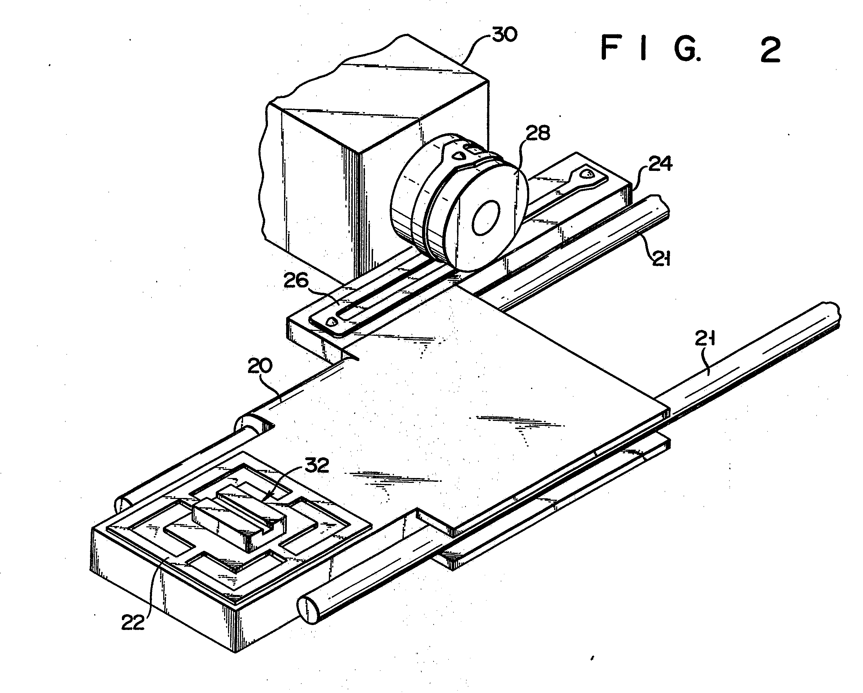

Fig. 2 is a perspective view of a carriage with magnetic head assembly 32 of the present invention.

In Fig. 2, carriage 20 is guided by a pair of guide rails 21 for movement in the radial direction of a floppy disk (not shown). Magnetic head assembly 32 is mounted on the front end portion of carriage 20 by means of gimbals plate 22. Pulley 28, which is mounted on the shaft (not shown) of stepping motor 30, is disposed beside carriage 20. The middle portion of thin, flexible steel belt 26 is wound around pulley 28. Both ends of belt 26 are fixed to belt holder 24 which is attached to carriage 20.

As pulley 28 is rotated by stepping motor 30, carriage 20 moves in the radial direction of the floppy disk for a distance corresponding to the angle of rotation of pulley 28. The moved distance of carriage 20 is an integral multiple of the track pitch of the disk. Thus, magnetic head assembly 32 on carriage 20 is always located over any track of the disk. The drive of motor 30 is controlled by a conventional control device (not shown).

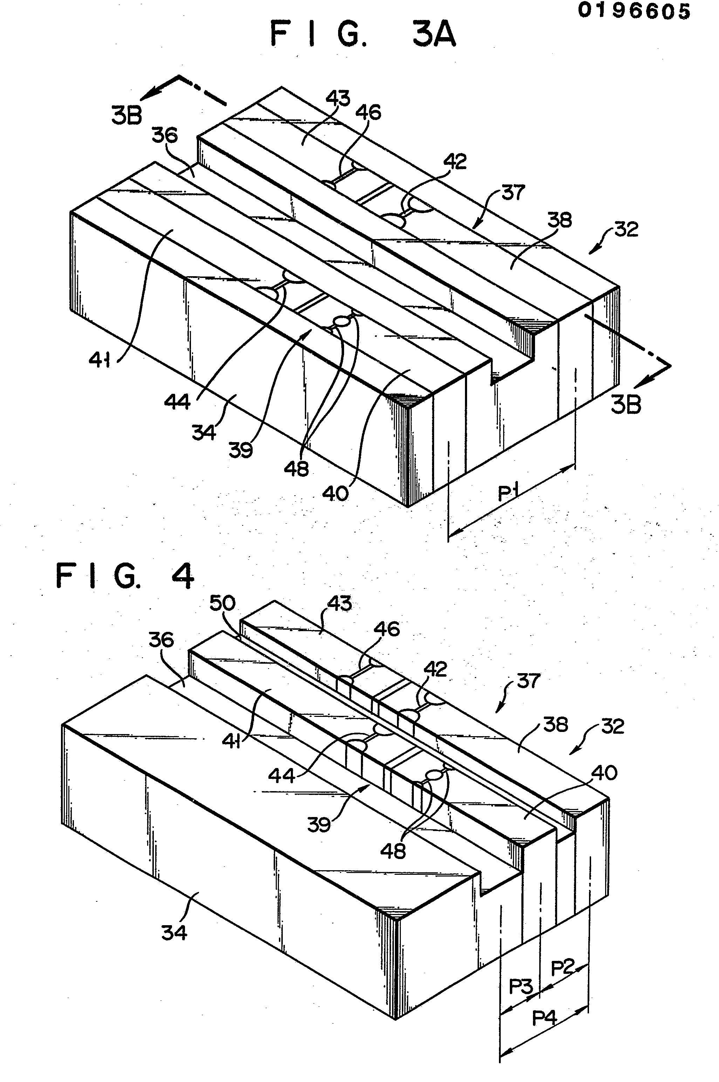

Figs. 3A and 3B shows magnetic head assembly 32 according to a first embodiment of the present invention. In Fig. 3A, numeral 34 designates a ceramic slider. Slider groove 36 is formed in the center of that surface of slider 34 in contact with the floppy disk, extending along the transfer direction of the disk. While the disk is rotating in contact with assembly 32, air is introduced into the space between the contact surfaces of the disk and assembly 32 through groove 36 and both side edge portions of the assembly. Thus, the gas lubrication characteristic between head and disk is improved.

Magnetic head assembly 32 comprises first and second core assemblies 37 and 39. Assembly 37 is disposed on one side of slider groove 36, and assembly 39 on the other. Both these assemblies are bulk-type core assemblies. First core assembly 37, which is of a leading wide erase type, includes read/write core 38 and erase core 43. As shown in Figs. 3A and 3B cores 38 and 43 are formed with read/write gap 42 and leading wide erase gap 46, respectively. Coils 38a and 43a are provided in cores 38 and 43, respectively. Assembly 37 is adapted for use with the perpendicular magnetic recording system, and is used in reading information which is recorded on the disk by that recording system.

Likewise, second core assembly 39, which is of a tunnel erase type, includes read/write core 41 and erase core 40. Cores 41 and 40 are formed with read/write gap 44 and erase gap 48, respectively. Assembly 39 is adapted for use with the longitudinal magnetic recording system, and is used in writing data on the floppy disk in accordance with such system or in reading information which is recorded on the disk by that recording system.

A coil, not shown, is mounted in cores 41 and 40 of second core assembly 39 as in the case of first core assembly.

Read/write gap 42 of core 38 in first core assembly 37 and read/write gap 44 of core 41 in second core assembly 39 are arranged in a straight line in a direction transverse to that of a movement of the floppy disk.

Distance $P_1$ between first and second core assemblies 37 and 39 is adjusted to an integral multiple of the track pitch of the floppy disk. Therefore, the two assemblies are bound to be located on different tracks. If distance $P_1$ between the assemblies is longer than the track pitch by factor m, and if assembly 37 is located over the nth track, then assembly 39 is located over the (n + m)th track. Thus, in replacing assemblies 37 and 39 with each other for alternative use, what is necessary is only to change the track number of the program of a control device for the drive of the carriage. If the control device is programmed in confomity to first core assembly 37, for example, the track number should only be changed from n to (n + m) when second core assembly 39 is to be used. Thus, the alternative use of the two assemblies does not require any mechanical switching means.

Fig. 4 shows a magnetic head assembly according to a second embodiment of the present invention. Head assembly 32 of this embodiment is well adapted for a system in which information is recorded on both sides of a floppy disk. In Fig. 4, first and second core assemblies 37 and 39 are arranged on one side of slider groove 36. Auxiliary slider groove 50 is formed between assemblies 37 and 39. In the double-sided recording system, two magnetic head assemblies are arranged so as to face each other across the floppy disk. If two such head assemblies as are shown in Fig. 3 are used, therefore, their core assemblies face one another to cause magnetic coupling between them. Thus, noises attributed to the magnetic coupling would inevitably be recorded on that side of the disk opposite to the side on which the information is to be written. Even though the magnetic head assemblies of the type shown in Fig. 4 are opposed to each other, however, their core assemblies cannot face one another, avoiding the aforesaid awkward situation.

According to the second embodiment, moreover, distance $P_2$ between first and second core assemblies 37 and 39 and distances $P_3$ and $P_4$ between assembly 37 and the center line of slider groove 36, or of the magnetic head assembly, and between assembly 39 and the center line are all integral multiples of the track pitch. As in the first embodiment shown in Fig. 3, therefore, core assemblies 37 and 39 are bound to be located over different tracks of the floppy disk, and do not require any mechanical switching means for alternatively selecting the core assemblies.

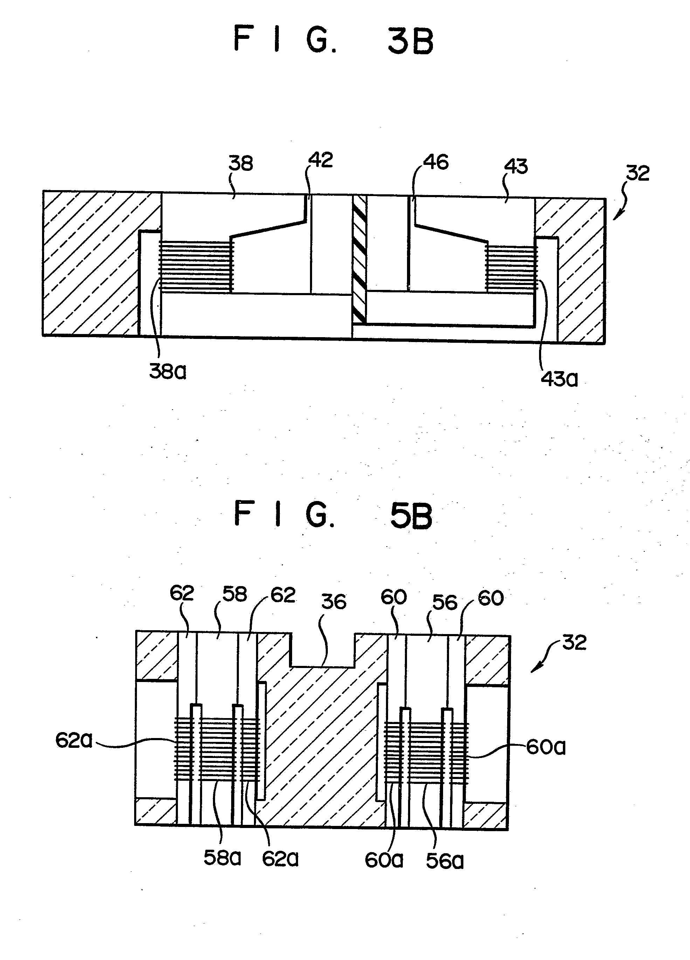

Figs. 5A and 5B shows magnetic head assembly according to a third embodiment of the present invention. In this embodiment, first and second core assemblies 52 and 54 of a laminate type are arranged on either side of slider groove 36. Both these core assemblies are of a tunnel erase type. The first core assembly is intended for high-density magnetic recording, and the second one for low-density recording. Assembly 52 includes read/write core 56 and erase cores 60 on either side of core 56. As shown in Figs. 5A and 5B core 56 is formed with read/write gap 64, and each core 60 with erase gap 68. Likewise, assembly 54 includes read/write core 58 and erase cores 62 on either side of core 58. Core 58 is formed with read/write gap 66, and each core 62 with erase gap 70. Gap 64 of assembly 52 is narrower than gap 66 of assembly 54. As shown in Fig. 3B coils 56a, 58a, 60a and 62a are provided in cores 56, 58, 60 and 62.

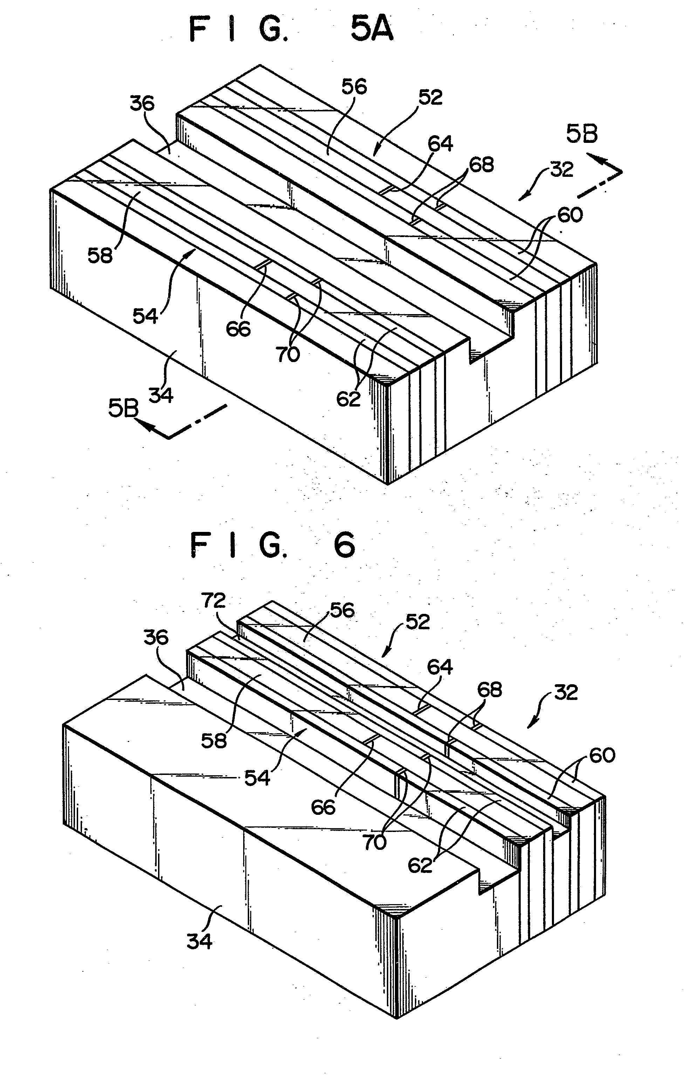

Fig. 6 is a perspective view of a magnetic head assembly according to a fourth embodiment of the present invention. In this embodiment, first and second core assemblies 52 and 54 similar to those shown in Fig. 5 are arranged only on one side of slider groove 36. Auxiliary slider groove 72 is formed between assemblies 52 and 54. Like the one shown in Fig. 4, the magnetic head assembly of this embodiment is adapted for use with the double-sided recording system.

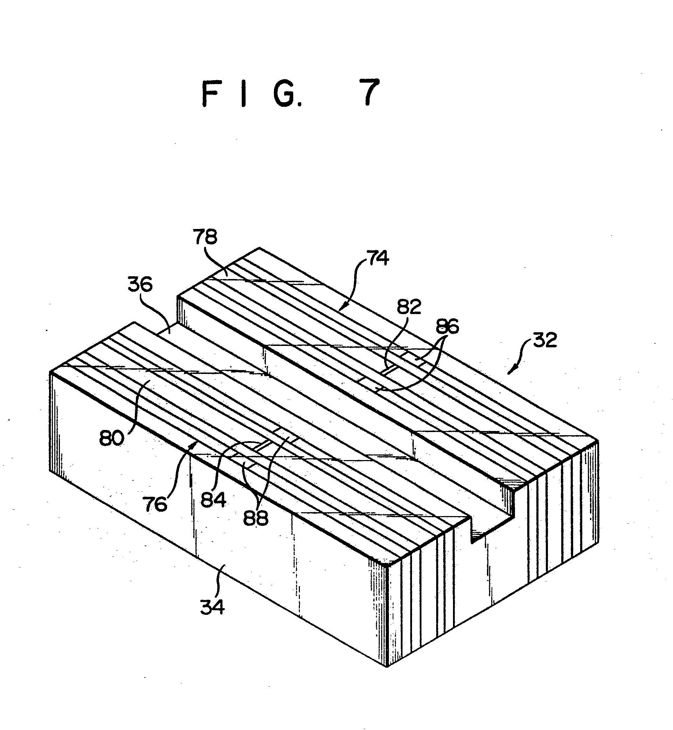

Fig. 7 is a perspective view of a magnetic head assembly according to a fifth embodiment of the present invention. In this embodiment, first and second core assemblies 74 and 76 of a laminate type are arranged on either side of slider groove 36. Both these core assemblies are of a straddle type. Assemblies 74 and 76 include read/write cores 78 and 80, respectively, which are formed with read/write gaps 82 and 84, respectively. Erase cores 86 are disposed on either side of core 78, and erase cores 88 on either side of core 80. The gaps between the erase cores and read/write cores are defined as erase gaps. First and second core assemblies 74 and 76 are intended for high- and low-density magnetic recording, respectively. Gap 82 is narrower than gap 84.

The present invention is not limited to the embodiments described above.

For example, the magnetic head assembly of the invention may comprise three or more core assemblies without any change in the fundamental configuration.

Moreover, the present invention is not limited to the magnetic head assemblies for floppy disks, and may also be applied to those for video disks and other magnetic disks. In these cases, the head assemblies do not require any erase cores.

It is to be understood, furthermore, that various changes and modifications may be effected in the present invention by one skilled in the art without departing from the scope or spirit of the invention.

- 1 -                                    0196605

Claims:

1.    A magnetic head assembly comprising coil-
containing core assemblies for writing and/or reading
magnetic signals, characterized in that:
said core assemblies include a plurality of core
assemblies of different types and/or magnetic properties
corresponding to different magnetic recording systems
and/or magnetic recording densities.

2.    The magnetic head assembly according to
claim 1, characterized in that said plurality of core
assemblies include first and second core assemblies different in type and/or magnetic properties.

3.    The magnetic head assembly according to
claim 1, characterized in that each said core assembly
has an erase gap.

4.    The magnetic head assembly according to
claim 3, characterized in that each said core assembly
is of a tunnel erase type.

5.    The magnetic head assembly according to
claim 3, characterized in that each said core assembly
is of a leading wide erase type.

6.    The magnetic head assembly according to
claim 3, characterized in that each said core assembly
is of a straddle type.

7.    The magnetic head assembly according to
claim 1, characterized in that each said core assembly
is of a bulk type.

8.    The magnetic head assembly according to
claim 1, characterized in that each said core assembly
is of a laminate type.

9.    The magnetic head assembly according to
claim 2, characterized in that each first and second
core assemblies are arranged on either side of a slider
groove.

10.   The magnetic head assembly according to
claim 2, characterized in that said first and second core assemblies are arranged on one side of a slider groove.

11. The magnetic head assembly according to claim 1, characterized in that a spacing between a plurality of cores is set to an integral multiple of a track pitch on said magnetic disk.

12. The magnetic head assembly according to claim 1, characterized in that a read-write gap of each core assembly is disposed in a straight line in a direction transverse to that of a movement of said magnetic disk.

F I G. 1

0196605

FIG. 2

# F I G. 3A

# F I G. 4

F I G. 3B

38  42  46  43  32

38a  43a

F I G. 5B

62  58  62  36  60  56  60

32

62a  60a

58a  62a  60a  56a

# FIG. 5A

# FIG. 6

# F I G.   7